# EUROPEAN PATENT SPECIFICATION

(11) **EP 1 898 589 B1**
(45) Date of publication and mention of the grant of the patent: **17.11.2010**
(21) Application number: 07017661.5
(22) Date of filing: 10.09.2007
(51) Int. Cl.: H04L 29/06, G06F 9/445

(54) **Mobile communication terminal and download control method**
Mobiles Kommunikationsendgerät und Download-Steuerungsverfahren dafür
Terminal de communication mobile et son procédé de contrôle de téléchargement

(30) Priority: 11.09.2006 JP 2006245931
(43) Date of publication of application: 12.03.2008
(73) Proprietor: NTT DoCoMo, Inc., Chiyoda-ku Tokyo 100-6150 (JP)
(72) Inventor: Torimoto, Naomi c/o Intell. Prop. Dpt. NTT DoCoMo, Inc., Tokyo 100-6150 (JP)
(74) Representative: Viering, Jentschura & Partner

(56) References cited:
- EP-A- 1 032 230

## Description

### BACKGROUND OF THE INVENTION

### Field of the Invention

The present invention relates to a mobile communication terminal that is capable of downloading continuous data subsequent to the data that has been received, from a server, and relates to a download control method that controls the downloading of the continuous data.

In the present application, "data" encompasses a wide range of meaning, including content data such as music, ring tones, and images, as well as data that is processed by applications, the application programs themselves, and control data.

### Related Background Art

The technology to download content data such as music, ring tones, and images from a server to a mobile communication terminal has been known for some time. When such content data are downloaded, the download requires a few dozen seconds or a few minutes of time, depending on the volume of data. However, a characteristic of communication using a mobile communication terminal is that it is easy for the communication state to vary, due to changes in the communication environment or movement of the user of the mobile communication terminal, and so forth.

Hence, sometimes a continuous download will be impossible during a data download due to factors such as the user of the mobile communication terminal moving out of range, and then downloading will sometimes become possible once again due to factors such as the user of the mobile communication terminal moving back within range. These circumstantial changes can occur frequently.

However, although the technology to download only the continuous data subsequent to the data that has already been downloaded for processing to resume the download upon recovery from such a download error is known, not all servers are provided with such a continuous data download function. Furthermore, because a procedure for the server notifying the mobile communication terminal whether or not the server has such a continuous data download function has not yet been developed, in reality, after a TCP session between the server and the mobile communication terminal has been disconnected, the mobile communication terminal cannot clearly distinguish whether or not the server has a continuous download function unless the mobile communication terminal re-requests the download of continuous data from the server.

In cases where the mobile communication terminal performs the download without being able to distinguish whether or not the server has a continuous data download function, if an error occurs during the download and, after the download is resumed, at the moment the mobile communication terminal requests a continuous data download, it becomes clear that the server does not possess the continuous data download function, not only is it impossible to perform the continuous data download, but a futile download was performed.

However, although a technology where the server disconnects the TCP session between the server and the mobile communication terminal in download interruption/resumption processing is known (See Japanese Application Laid Open Gazette No. 2002-304334), a technology where the mobile communication terminal requests the disconnection of the TCP session is not known.
A method, server and mobile terminal to resume a download after it has been interrupted is known from EP 1 032 230 A2.

### SUMMARY OF THE INVENTION

The present invention was conceived in order to solve these problems, and an object of the present invention is to provide a mobile communication terminal and a download control method which are capable of suitably controlling the downloading of continuous data and avoids performing futile downloads, even in circumstances where it cannot be distinguished clearly whether or not the server possesses a continuous data download function.

In order to achieve the above object, the mobile communication terminal according to the present invention comprises a download request section that issues a request to download continuous data which are data that have not yet been received in cases where a download is interrupted, to a server; a function information reception section that receives function information which indicates whether the server is available for a continuous data download and which has been transmitted by the server on the basis of a predetermined procedure in response to the request from the download request section; a first control section that judges whether the server is not available for the continuous data download on the basis of the function information received by the function information reception section and, in cases where it is possible to judge that the server is not available for the continuous data download, suspends continuous data download processing and, in cases where it is not possible to judge that the server is not available for the continuous data download, disconnects the TCP session between the mobile communication terminal and the server, and issues a request for the continuous data download, to the server; and a second control section that controls whether to continue or suspend the continuous data download in accordance with a predetermined code that corresponds with the function of the server and that has been transmitted by the server on the basis of a predetermined procedure in response to the request from the first control section.

Furthermore, a download control method according to the present invention is a method for controlling a download of continuous data which are data that have not yet been received in cases where a download of data from a server to a mobile communication terminal is interrupted, comprising: a download request step in which the mobile communication terminal issues a request for a continuous data download, to the server; a function information transmission step in which the server transmits function information indicating whether the server is available for the continuous data download to the mobile communication terminal on the basis of a predetermined procedure in response to the request; a first control step in which the mobile communication terminal receives the function information and judges whether the server is not available for the continuous data download on the basis of the received function information and, in cases where it is possible to judge that the server is not available for the continuous data download, suspends continuous data download processing and, in cases where it is not possible to judge that the server is not available for the continuous data download, disconnects the TCP session between the mobile communication terminal and the server, and issues a request for the continuous data download, to the server; a code transmission step in which the server transmits a predetermined code that corresponds with the function of the server to the mobile communication terminal on the basis of a predetermined procedure in response to the continuous data download request; and a second control step in which the mobile communication terminal controls whether to continue or suspend the continuous data download in accordance with the code transmitted from the server.

According to the mobile communication terminal or download control method of the present invention, if the mobile communication terminal issues a continuous data download, to the server, function information indicating whether the server is available for the continuous data download is transmitted by the server to the mobile communication terminal on the basis of a predetermined procedure in response to the request. The mobile communication terminal receives the function information and judges whether the server is not available for the continuous data download on the basis of the received function information and, in cases where it is possible to judge that the server is not available for the continuous data download, suspends the continuous data download processing. Accordingly, in cases where it is possible to judge that the server is not available for the continuous data download, futile continuous data download processing can be avoided.

However, in cases where it is not possible to judge that the server is not available for the continuous data download, the TCP session between the mobile communication terminal and the server is disconnected and a request for the continuous data download is issued to the server. If a predetermined code that corresponds with the functions of the server is transmitted by the server to the mobile communication terminal on the basis of a predetermined procedure in response to this request, the mobile communication terminal controls whether to continue or suspend the continuous data download in accordance with the code from the server. Accordingly, even in cases where it is not possible to judge that the server is not available for the continuous data download, it can be suitably controlled whether the continuous data download is continued or suspended in accordance with the code from the server, and the execution of a futile download can be avoided and the download execution of the continuous data can be suitably controlled.

According to the present invention, even in a situation where it cannot be clearly distinguished whether the server possesses a continuous data download function, the execution of futile downloads can be avoided and the download execution of the continuous data can be suitably controlled.

### BRIEF DESCRIPTION OF THE DRAWINGS

Fig. 1 is a hardware constitutional view of the communication system of an embodiment of the invention.

Fig. 2 is a function block constitutional view of a mobile communication terminal and a server.

Fig. 3 is a flowchart that shows a procedure of the download resumption control processing.

### DESCRIPTION OF THE PREFERRED EMBODIMENTS

An embodiment of the present invention will be described hereinbelow with reference to the drawings.

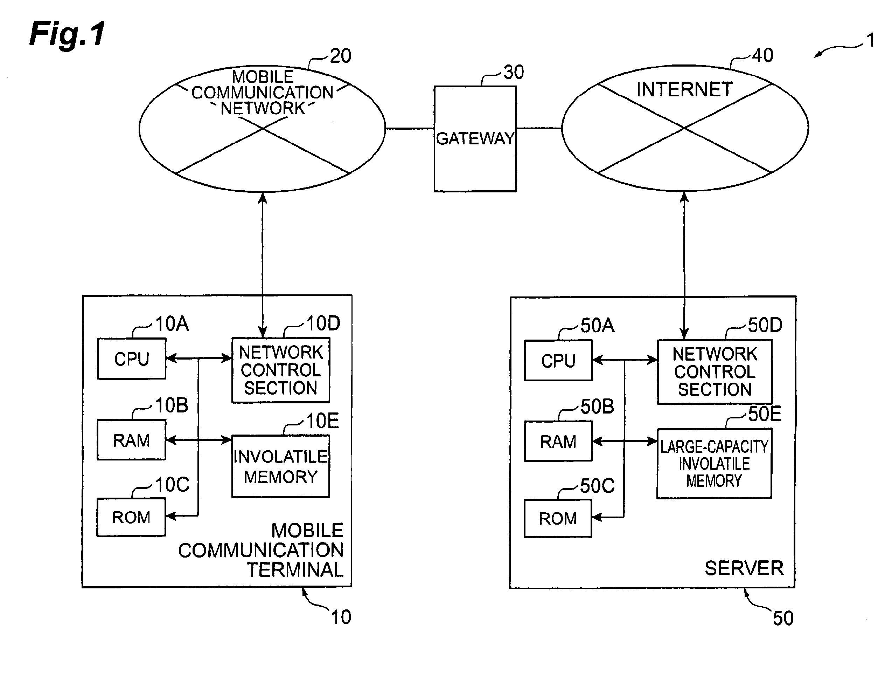

Fig. 1 shows a hardware constitutional view of the communication system of this embodiment. As shown in Fig. 1, the communication system 1 is constituted comprising a mobile communication terminal 10 according to the present invention and a server (so-called WEB server) 50 that provides content via the Internet 40. The mobile communication terminal 10 is capable of communicating with the server 50 via a mobile communication network 20, gateway 30, and the Internet 40.

The mobile communication terminal 10 is constituted comprising a CPU 10A, a RAM 10B, a ROM 10C, a network control section 10D that performs processing to communicate with the outside, and an involatile memory 10E. Likewise, the server 50 is constituted comprising a CPU 50A, a RAM 50B, a ROM 50C, a network control section 50D that performs processing to communicate with the outside, and a large-capacity involatile memory 50E that holds a large-capacity storage area.

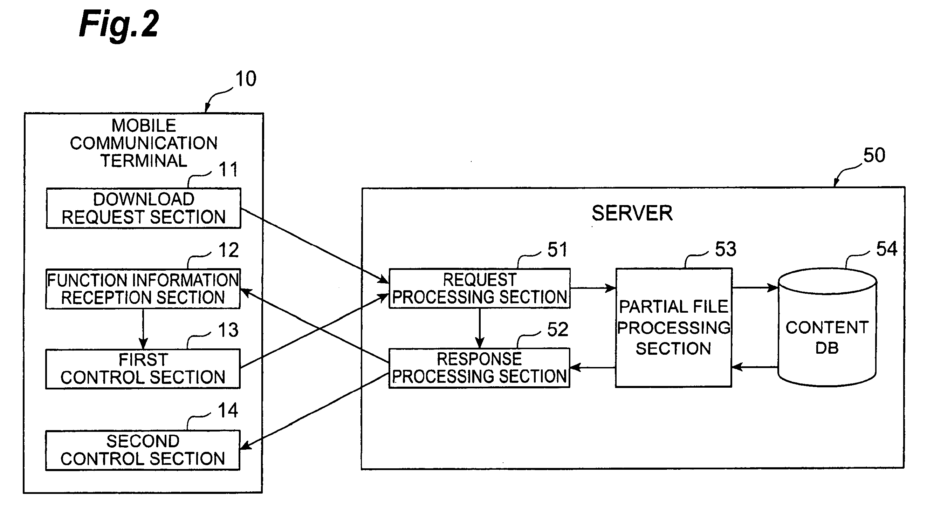

The mobile communication terminal 10 and server 50 that have such a hardware constitution has the function block constitution shown in Fig. 2 when viewed from the perspective of a function block constitution. As shown in Fig. 2, the mobile communication terminal 10 comprises, as the function block constitution, a download request section 11, a function information reception section 12, a first control section 13, and a second control section 14.

Of the above components, the download request section 11 has a function for issuing a request to the server 50 to download data that have not yet been received in cases where a download has been interrupted (called 'continuous data' hereinbelow). The function information reception section 12 has a function for receiving function information that has been transmitted by the server 50 on the basis of a predetermined procedure in response to a request from the download request section 11 (i.e. function information indicating whether the server 50 is available for continuous data downloads). The first control section 13 has a function for judging whether the server 50 is not available for continuous data downloads on the basis of the received function information and, in cases where it is possible to judge that the server 50 is not available for continuous data downloads, for suspending the continuous data download processing and, in cases where it is not possible to judge that the server 50 is not available for continuous data downloads, for disconnecting the TCP session between the mobile communication terminal 10 and the server 50, and issuing a request for a continuous data download, to the server 50. The second control section 14 has a function for controlling whether the continuous data download is continuous in accordance with a predetermined code that corresponds with the functions of the server 50 that is transmitted by the server 50 on the basis of a predetermined procedure in response to a request from the first control section 13.

Meanwhile, the server 50 is constituted comprising a request processing section 51, a response processing section 52, a partial file processing section 53, and a content database 54. Such a request processing section 51 has a function for receiving various requests (for example, download requests, download resumption requests, and so forth) from the mobile communication terminal 10 and transmitting the requested content to the partial file processing section 53. The content database 54 has a function for storing various content data. The partial file processing section 53 has a function for specifying the range of the continuous data on the basis of information representing the range of the continuous data contained in the request or information representing the start address of the continuous data if the request from the mobile communication terminal 10 is a continuous data download request, extracting the continuous data from the content database 54, and transmitting continuous data to the mobile communication terminal 10 via the response processing section 52. Further, the partial file processing section 53 has a function for extracting all the data from the content database 54 and transmitting the data from the start to the mobile communication terminal 10 via the response processing section 52 if the request from the mobile communication terminal 10 is a request to download data from the start.

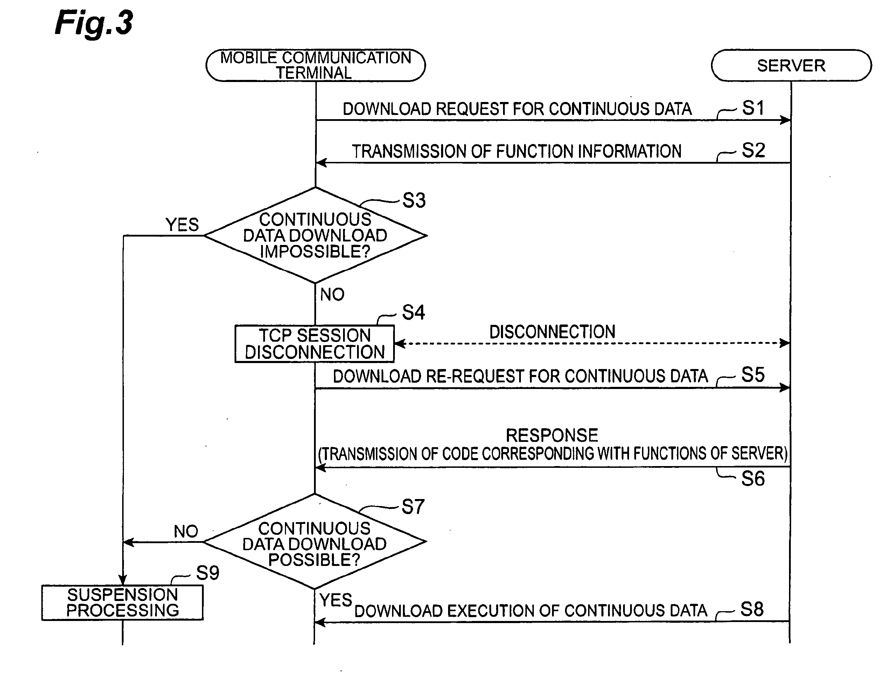

The download control processing will be described next by using Fig. 3. The downloading of data from the server 50 to the mobile communication terminal 10 is interrupted, whereupon in a situation where the download is re-started, the download request section 11 of the mobile communication terminal 10 first transmits the continuous data download request to the server 50, as shown in Fig. 3 (S1). Here, the continuous data download request contains, for example, information representing the range of the continuous data in all of the data or information representing the start address of the continuous data. In response to the request, the request processing section 51 in the server 50 that received the request transmits function information indicating whether the server 50 is available for continuous data downloads, to the mobile communication terminal 10 via the response processing section 52 on the basis of a predetermined procedure (S2).

If the function information reception section 12 in the mobile communication terminal 10 receives the function information, the first control section 13 judges whether the server 50 is not available for continuous data downloads on the basis of the received function information (S3). Here, in cases where it is possible to judge that the server 50 is not available for continuous data downloads, the first control section 13 quickly suspends the continuous data download processing in order to avoid futile download processing of continuous data (S9).

However, in cases where it is not possible to clearly judge that the server 50 is not available for continuous data downloads in S3, the first control section 13 disconnects the TCP session between the mobile communication terminal 10 and server 50 (S4) and then re-sends a continuous data download request to the server 50 (S5).

In response to the request, the request processing section 51 in the server 50 that received the request transmits a predetermined code that corresponds with the functions of the server 50, to the mobile communication terminal 10 via the response processing section 52 on the basis of a predetermined procedure (S6).

The second control section 14 in the mobile communication terminal 10 judges once again whether the server 50 is available for continuous data downloads in accordance with the code that is received from the server 50 (S7). Here, in cases where it is judged that the server 50 is not available for continuous data downloads, the second control section 14 quickly suspends the continuous data download processing in order to avoid futile download processing of continuous data (S9).

However, in cases where it is judged that the server 50 is available for continuous data downloads in S7, the second control section 14 performs control to continue the continuous data download (S8). More specifically, the partial file processing section 53 of the server 50 specifies the range of the continuous data on the basis of information representing the range of the continuous data contained in the download re-request transmitted in S5 or information representing a continuous data start address, extracts the continuous data from the content database 54, and transmits the continuous data to the mobile communication terminal 10 via the response processing section 52 (S8: download execution of continuous data).

According to the embodiment described hereinabove, even in cases where it is not possible to clearly judge that the server 50 is not available for continuous data downloads on the basis of function information from the server 50, it is possible to suitably control whether the continuous data download is continued or interrupted on the basis of the code that corresponds with the function of the server 50, the execution of futile downloads can be avoided, and the download execution of continuous data can be suitably controlled.

Further, the processing of Fig. 3 may also be executed by targeting only continuous data with a size that lies within a predetermined range. For example, the processing target may also be limited by targeting data which are more than 100 kilobytes and no more than one megabyte.

## Claims

1. A mobile communication terminal (10), comprising:
a download request section (11) that issues a request (S1) to download continuous data which are data that have not yet been received in cases where a download is interrupted, to a server (50);
a function information reception section (12) that receives function information which indicates whether the server (50) is available for a continuous data download and which has been transmitted (S2) by the server (50) on the basis of a predetermined procedure in response to the request (S1) from the download request section (11);
a first control section (13) that judges whether the server (50) is not available for the continuous data download on the basis of the function information received (S2) by the function information reception section (12) and, in cases where it is possible to judge (S3) that the server (50) is not available for the continuous data download, suspends continuous data download processing (S9) and, in cases where it is not possible to judge (S9) that the server (50) is not available for the continuous data download, disconnects (S4) the TCP session between the mobile communication terminal (10) and the server (50), and issues a request for the continuous data download (S5), to the server (50); and
a second control section (14) that controls (S7) whether to continue (S8) or suspend (S9) the continuous data download in accordance with a predetermined code that corresponds with the function of the server (50) and that has been transmitted (S6) by the server (50) on the basis of a predetermined procedure in response to the request (S5) from the first control section (13).

2. A method for controlling a download of continuous data which are data that have not yet been received in cases where a download of data (54) from a server (50) to a mobile communication terminal (10) is interrupted, comprising:
a download request step (S1) in which the mobile communication terminal (10) issues a request for a continuous data download, to the server (50);
a function information transmission step (S2) in which the server (50) transmits function information indicating whether the server (50) is available for the continuous data download to the mobile communication terminal on the basis of a predetermined procedure in response to the request (S1);
a first control step (S3) in which the mobile communication terminal (10) receives the function information and judges whether the server (50) is not available for the continuous data download on the basis of the received function information and, in cases where it is possible to judge that the server (50) is not available for the continuous data download, suspends (S9) continuous data download processing and, in cases where it is not possible to judge that the server (50) is not available for the continuous data download, disconnects (S4) the TCP session between the mobile communication terminal (10) and the server (50), and issues a request for the continuous data download (S5), to the server (50) ;
a code transmission step (S6) in which the server (50) transmits a predetermined code that corresponds with the function of the server (50) to the mobile communication terminal (10) on the basis of a predetermined procedure in response to the continuous data download request (S5); and
a second control step (S7) in which the mobile communication terminal (10) controls whether to continue (S8) or suspend (S9) the continuous data download in accordance with the code transmitted from the server (50).

## Patentansprüche

1. Mobilkommunikations-Endgerät (10), aufweisend;
eine Herunterlade-Anforderungs-Sektion (11), die eine Anforderung (S1) für Herunterladen von kontinuierlichen Daten, welche Daten sind, die noch nicht empfangen wurden in Fällen, wo ein Herunterladen unterbrochen wird, an einen Server (50) ausgibt;
eine Funktions-Informations-Empfangs-Sektion (12), die Funktions-Information, die angibt, ob der Server (50) verfügbar ist für ein Kontinuierlich-Daten-Herunterladen, und welche übertragen worden ist (S2) durch den Server (50) auf der Basis einer vorgegebenen Prozedur in Antwort auf die Anforderung (S1) von der Herunterlade-Anforderungs-Sektion (11), empfängt;
eine erste Kontroll-Sektion (13), die beurteilt, ob der Server (50) nicht verfügbar ist für das Kontinuierlich-Daten-Herunterladen auf der Basis der durch die Funktions-Informations-Empfangs-Sektion (12) empfangenen (S2) Funktions-Information und, in Fällen, wo es möglich ist, zu beurteilen (S3), dass der Server (50) nicht verfügbar ist für das Kontinuierlich-Daten-Herunterladen, Kontinuierlich-Daten-Herunterlade-Verarbeitung (S9) einstellt und, in Fällen, wo es nicht möglich ist zu beurteilen (S9), dass der Server (50) nicht verfügbar ist für Kontinuierlich-Daten-Herunterladen, die TCP-Sitzung zwischen dem Mobilkommunikations-Endgerät (10) und dem Server (50) trennt (S4) und eine Anforderung für das Kontinuierlich-Daten-Herunterladen an den Server (50) ausgibt (S5) ; und
eine zweite Kontroll-Sektion (14), die kontrolliert (S7), ob das Kontinuierlich-Daten-Herunterladen fortgesetzt (S8) oder eingestellt (S9) werden soll gemäß einem vorgegebenen Code der mit der Punktion des Servers (50) korrespondiert und der durch den Server (50) übertragen wurde (S6) auf der Basic einer vorgegebenen Prozedur in Antwort auf die Anforderung (S5) von der ersten Kontroll-Sektion (13).

2. Verfahren zum Kontrollieren eines Herunterladens von kontinuierlichen Daten, welche Daten sind, die noch nicht empfangen wurden in Fällen, wo ein Herunterladen von Daten (54) von einem Server (50) zu einem Mobilkommunikations-Endgerät (10) unterbrochen wird, aufweisend:
einen Herunterlade-Anforderungs-Schritt (S1), in dem das Mobilkommunikations-Endgerät (10) eine Anforderung für ein Kontinuierlich-Daten-Herunterladen an den Server (50) ausgibt;
einen Funktions-Informations-Übertragungs-Schritt (S2), in dem der Server (50) Funktions-Information, die angibt, ob der Server (50) verfügbar ist für das Kontinuierlich-Daten-Herunterladen, an das Mobilkommunikations-Endgerät überträgt auf der Basis einer vorgegebenen Prozedur in Antwort auf die Anforderung (S1);
einen ersten Kontroll-Schritt (S3), in dem das Mobilkommunikations-Endgerät (10) die Funktions-Information empfängt und beurteilt, ob der Server (50) nicht verfügbar ist für das Kontinuierlich-Daten-Herunterladen auf der Basis der empfangenen Funktions-Information und, in Fällen, wo es möglich ist, zu beurteilen, dass der Server (50) nicht verfügbar ist für das Kontinuierlich-Daten-Herunterladen, Kontinuierlich-Daten-Herunterlade-verarbeitung einstellt (S9) und, in Fällen, wo es nicht möglich ist zu beurteilen, dass der Server (50) nicht verfügbar ist für Kontinuierlich-Daten-Herunterladen, die TCP-Sitzung zwischen dem Mobilkommunikations-Endgerät (10) und dem Server (50) trennt (S4), und eine Anforderung für das Kontinuierlich-Daten-Herunterladen an den Server (50) ausgibt (S5) ; einen Code-Übertragungs-Schritt (S6), in dem der Server (50) einen vorgegebenen Code, der mit der Funktion des Servers (50) korrespondiert, an das Mobilkommunikations-Endgerät (10) überträgt auf der Basis einer vorgegebenen Prozedur in Antwort auf die Kontinuierlich-Daten-Herunterlade-Anforderung (S5) ; und
einen zweiten Kontroll-Schritt (S7), in dem das Mobilkommunikations-Endgerät (10) kontrolliert, ob das kontinuierliche Daten-Herunterladen fortgesetzt (S8) oder eingestellt (S9) werden soll gemäß dem von dem Server (50) übertragenen Code.

## Revendications

1. Terminal de communication mobile (10), comprenant :
une section de requête de téléchargement (11) qui délivre une requête (S1) pour télécharger des données continues qui sont des données qui n'ont pas encore été reçues dans les cas où un téléchargement est interrompu, à un serveur (50) ;
une section de réception d'informations de fonctions (12) qui reçoit des informations de fonctions qui indiquent si le serveur (50) est disponible pour un téléchargement de données continues et qui ont été transmises (S2) par le serveur (50) sur la base d'une procédure prédéterminée en réponse à la requête (S1) provenant de la section de requête de téléchargement (11) ; une première section de commande (13) qui juge si le serveur (50) n'est pas disponible pour le téléchargement de données continues sur la base des informations de fonctions reçues (S2) par la section de réception d'informations de fonctions (12) et, dans les cas où il est possible de juger (S3) que le serveur (50) n'est pas disponible pour le téléchargement de données continues, suspend le traitement de téléchargement de données continues (S9) et, dans les cas où il n'est pas possible de juger (S9) que le serveur (50) n'est pas disponible pour le téléchargement de données continues, déconnecte (S4) la session TCP entre le terminal de communication mobile (10) et le serveur (50), et délivre une requête pour le téléchargement de données continues (S5), au serveur (50) ; et
une seconde section de commande (14) qui commande (S7) la poursuite (S8) ou la suspension (S9) du téléchargement de données continues selon un code prédéterminé qui correspond à la fonction du serveur (50) et qui a été transmis (S6) par le serveur (50) sur la base d'une procédure prédéterminée en réponse à la requête (S5) de la première section de commande (13).

2. Procédé pour commander un téléchargement de données continues qui sont des données qui n'ont pas encore été reçues, dans les cas où un téléchargement de données (54) d'un serveur (50) vers un terminal de communication mobile (10) est interrompu, comprenant :
une étape de requête de téléchargement (S1), dans laquelle le terminal de communication mobile (10) délivre une requête de téléchargement de données continues au serveur (50) ;
une étape de transmission d'informations de fonctions (S2), dans laquelle le serveur (50) transmet des informations de fonctions indiquant si le serveur (50) est disponible pour le téléchargement de données continues au terminal de communication mobile sur la base d'une procédure prédéterminée en réponse à la requête (S1) ;
une première étape de commande (S3), dans laquelle le terminal de communication mobile (10) reçoit les informations de fonctions et juge si le serveur (50) n'est pas disponible pour le téléchargement des données continues sur la base des informations de fonctions reçues et, dans les cas où il est possible de juger que le serveur (50) n'est pas disponible pour le téléchargement de données continues, suspend (S9) le traitement de téléchargement de données continues et, dans les cas où il n'est pas possible de juger que le serveur (50) n'est pas disponible pour le téléchargement de données continues, déconnecte (S4) la session TCP entre le terminal de communication mobile (10) et le serveur (50), et délivre une requête pour le téléchargement de données continues (S5), au serveur (50);
une étape de transmission de code (S6), dans laquelle le serveur (50) transmet un code prédéterminé qui correspond à la fonction du serveur (50) au terminal de communication mobile (10) sur la base d'une procédure prédéterminée en réponse à la requête de téléchargement de données continues (S5) ; et
une seconde étape de commande (S7), dans laquelle le terminal de communication mobile (10) commande la poursuite (S8) ou la suspension (S9) du téléchargement de données continues en fonction du code transmis par le serveur (50).
